# EUROPEAN PATENT APPLICATION

(11) **EP 2 068 320 A1**
(43) Date of publication of application: **10.06.2009**
(21) Application number: 07850388.5
(22) Date of filing: 11.12.2007
(51) Int. Cl.: G11B 20/10, G06F 21/24

(54) **RECORDING REPRODUCTION DEVICE, REPRODUCTION DEVICE, AND HOST DEVICE**

(30) Priority: 29.12.2006 US 882626 P
(71) Applicant: Panasonic Corporation, Kadoma-shi Osaka 571-8501 (JP)
(72) Inventor: NAKANO, Toshihisa, Osaka 540-6207 (JP); HARADA, Shunji, Osaka 540-6207 (JP); YAMAMOTO, Masaya, Osaka 540-6207 (JP); MURASE, Kaoru, Osaka 540-6207 (JP)
(74) Representative: Pautex Schneider, Nicole Véronique
(86) International application number: PCT/JP2007/073822
(87) International publication number: WO 2008/081690

(57) **Abstract**

It is an object of the present invention to provide a universal drive capable of recording and reproducing high-image quality contents on and from various media, such as BD, HD-DVD, DVD and others according to the AACS. The drive (10) is connected to a host apparatus, and which reads from and writes onto a media M, which includes: a readout unit (11) which reads and writes information from and onto the recording medium; a media type identifying unit (12) which identifies a type of the recording medium based on the information read from the recording medium by the readout unit (11); and a data analysis unit (13) and an authentication unit (14) which performs an operation for copyright protection associated with a result of the identification by the media type identifying unit (12).

## Description

### Technical Field

The present invention relates to a recording and reproduction apparatus which reads and writes information from and to a recording medium such as an optical disc, and a host apparatus connected to the recording and reproduction apparatus.

### Background Art

In recent years, along with the advancement of the multimedia technology and the arrival of high-capacity recording media, digital contents (hereinafter referred to as contents) including audio and video stored in the high-capacity recording media such as optical discs have been actively distributed. The importance of copyright protection is increasing, because distributed contents are easily subject to be reproduced by computers, reproduction apparatuses and others.

The Blu-ray Discs (BD) and the HD-DVDs are the next-generation optical discs for recording high-image quality contents, and the Advanced Access Content System (AACS) standard has been formulated as a copyright protection scheme for the next-generation optical discs. Currently, a copyright protection scheme known as the Content Protection for Recordable Media (CPRM) is used for recording contents of standard image quality on DVDs. Meanwhile, the application of the AACS as the copyright protection scheme for recording high-image quality contents on conventional the DVDs has been considered.

### Disclosure of Invention

### Problems that Invention is to Solve

However, in the AACS, there are components dependent on the types of media (recordable type: BD-R/RE, HD-DVD-R/RW, BD9-R/RE, HD-DVD9-R/RW, reproduction-only type: BD-ROM, HD-DVD-ROM) and common components independent of the type of media. Thus, in order to achieve the universal drive, it is necessary to perform recording and reproduction based on the AACS according to the type of media.

Thus, it is an object of the present invention to provide a universal drive (recording and reproduction apparatus, host apparatus) capable of recording and reproducing high-image quality contents on and from various media, such as BD, HD-DVD, DVD and others according to the AACS.

### Means to Solve the Problems

In order to achieve the above object, the recording and reproduction apparatus according to the present invention is a recording and reproduction apparatus connected to a host apparatus, which reads information from and writes the information onto a recording medium, the recording and reproduction apparatus including: a reading and writing unit which reads and writes the information from and onto the recording medium; an identifying unit which identifies a type of the recording medium based on the information read from the recording medium by the reading and writing unit; and a copyright protection unit which performs an operation for copyright protection associated with a result of the identification by the identifying unit. Thus, the operation associated with the type of the recording medium is performed. Therefore, it is possible to provide a recording and reproduction apparatus which is capable of recording and reproducing high image quality contents on various media such as BD, HD-DVD, and DVD according to the AACS.

Here, it may be that the identifying unit identifies the type as a first type or a second type, the copyright protection unit includes: a storage unit in which a host revocation list is stored; a comparison unit which reads a host revocation list from the recording medium via the reading and writing unit and to compare (a) the host revocation list that has been read and (b) the host revocation list stored in the storage unit to identify a newest host revocation list, when the identifying unit identifies the type as the first type; an updating unit which (a) stores, in the storage unit, the newest host revocation list identified in the comparison by the comparison unit, or (b) updates, via the reading and writing unit, the host revocation list recorded on the recording medium, according to a result of the comparison by the comparison unit; and an authentication unit which performs authentication with the host apparatus using the newest host revocation list identified in the comparison by the comparison unit. Thus, it is possible to update the host revocation list stored in the storage unit using the method according to the type of the recording medium. Therefore, it is possible to provide the recording and reproduction apparatus which is capable of recording and reproducing high image quality contents on various media such as BD, HD-DVD, and DVD according to the AACS.

Furthermore, it may be that the identifying unit identifies the type as a first type or a second type, the reading and writing unit reads a unique disc identifier from the recording medium, and the copyright protection unit includes: an ID extension unit which performs bit-extension on the unique disc identifier that has been read from the recording medium by the reading and writing unit, when the identifying unit identifies the type as the first type; and an input and output unit which transmits the unique disc identifier bit-extended by the ID extension unit to the host apparatus when the identifying unit identifies the type as the first type, and to transmit the unique disc identifier read from the recording medium by the reading and writing unit to the host apparatus when the identifying unit identifies the type as the second type. Thus, it is possible to extend media ID using a method according to the type of the recording medium. Therefore, it is possible to provide the recording and reproduction apparatus which is capable of recording and reproducing high image quality contents on various media such as BD, HD-DVD, and DVD according to the AACS.

The host apparatus according to the present invention is a host apparatus connected to a recording and reproduction apparatus which reads information from and writes the information to a recording medium, the host apparatus including: a first input and output unit which inputs and outputs the information to and from the recording and reproduction apparatus; and a copyright protection unit which performs an operation for copyright protection associated with a type of the recording medium based on information related to the recording medium, the information being received from the recording and reproduction apparatus via the first input and output unit, in which the recording and reproduction apparatus includes a second input and output unit which inputs and outputs the information to and from the host apparatus, the second input and output unit transmits record information and type information to the host apparatus as the information related to the recording medium, the record information indicating whether or not key information is recorded on a user area of the recording medium, and the type information indicating whether a type of the recording medium is the first type or the second type, and the copyright protection unit includes: a storage unit which stores key information; a first key information reception unit which obtains the key information recorded on the user area of a recording medium of the first type via the recording and reproduction apparatus and the first input and output unit; and a second key information reception unit which obtains the key information recorded on the user area of a recording medium of the second type and the key information recorded on a lead-in area of the recording medium of the second type via the recording and reproduction apparatus and the first input and output unit. Thus, it is possible to record the key information using the method according to the type of the recording medium. Therefore, it is possible to provide the host apparatus which is capable of recording and reproducing high image quality contents on various media such as BD, HD-DVD, and DVD according to the AACS.

Still further, it may be that the copyright protection unit further includes: a first comparison unit which compares the key information obtained by the first key information reception unit and the key information stored in the storage unit to identify newest key information when (a) the type information indicates the first type and (b) the record information indicates that the key information is recorded on the user area of the recording medium; a first updating unit which (i) records the key information stored in the storage unit on the user area of the recording medium of the first type via the first input and output unit and the recording and reproduction apparatus, when (i-1) the type information indicates the first type and (i-2) the record information indicates that the key information is not recorded on the user area of the recording medium, and (ii) records the newest key information identified in the comparison by the first comparison unit on the user area of the recording medium of the first type or store the newest key information on the storage unit, according to a result of the comparison by the first comparison unit, when (ii-1) the type information indicates the first type and (ii-2) the record information indicates that the key information is recorded on the user area on the recording medium; a second comparison unit which compares (i) the key information on the lead-in area obtained by the second key information reception unit and the key information stored in the storage unit to identify the newest key information, when (i-1) the type information indicates the second type and (i-2) the record information indicates that the key information is not recorded on the user area of the recording medium, and (ii) (a) the key information on the user area, (b) the key information on the lead-in area obtained by the second key information reception unit and (c) the key information stored in the storage unit to identify the newest key information, when (ii-1) the type information indicates the second type and (ii-2) the record information indicates that the key information is recorded on the user area of the recording medium; and a second updating unit which (i) (a) records the newest key information identified in the comparison by the second comparison unit, on the user area of the recording medium of the second type via the first input and output unit and the recording and reproduction apparatus and (b) stores, according to a result of the comparison by the second comparison unit, the newest key information on the storage unit, when (i-1) the type information indicates the second type and (i-2) the record information indicates that the key information is not recorded on the user area of the recording medium, and (ii) (a) records the newest key information identified in the comparison by the second comparison unit on the user area of the recording medium of the second type via the first input and output unit and the recording and reproduction apparatus and/or (b) stores the newest key information on the storage unit, when (ii-1) the type information indicates the second type and (ii-2) the record information indicates that the key information is recorded on the user area of the recording medium, according to a result of the comparison by the second comparison unit. Thus, it is possible to record the key information using the method according to the type of the recording medium. Therefore, it is possible to provide the host apparatus which is capable of recording and reproducing the high image quality contents on various media such as BD, HD-DVD, and DVD according to the AACS.

Furthermore, it maybe that the identifying unit identifies the type as a first type or a second type, the copyright protection unit includes: a signal processing unit which generates a sum signal and a differential signal based on the information read by the reading and writing unit, the sum signal being for reading digital information configured on a track of the recording medium and the differential signal indicating a tracking error; a first key transformation data generating unit which demodulates key transformation data recorded on a recording medium of the first type; a first demodulator which demodulates data recorded on the recording medium of the first type; a second key transformation data generating unit which demodulates key transformation data recorded on a recording medium of the second type; a second demodulator which demodulates data recorded on the recording medium of the second type; and a switching unit which switches connections between the signal processing unit and one of the first demodulator, the second demodulator, the first key transformation data generating unit, and the second key transformation data generating unit such that (i) the sum signal output from the signal processing unit is input to the first demodulator and the differential signal output from the signal processing unit is input to the first key transformation unit, when the identifying unit identifies the type as the first type, and (ii) the sum signal output from the signal processing unit is input to the second demodulator and the second key transformation data generating unit, when the identifying unit identifies the type as the second type. Thus, it is possible to read (generate) the key transformation data using the method according to the type of the recording medium. Therefore, it is possible to provide the recording and reproduction apparatus which is capable of recording and reproducing the high image quality contents on various media such as BD, HD-DVD, DVD according to the AACS.

Note that the present invention may not only implemented as the recording and reproduction apparatus, but also as a recording and reproduction method including the characteristic units of the recording and reproduction apparatus as steps, as a reproduction apparatus including the characteristic units of the recording and reproduction apparatus, as a reproduction method including the characteristic units of the recording and reproduction apparatus as steps, and a program which causes a computer to execute these steps. Furthermore, it is needless to say that the program can be distributed via a data transmission media.

### Effects of the Invention

As described above, according to the present invention, the operation for copyright protection associated with the type of the recording medium is performed. It is possible to provide a universal drive (recording and reproduction apparatus, host apparatus) capable of recording and reproducing high-image quality contents on and from various media, such as BD, HD-DVD, DVD and others according to the AACS.

### Brief Description of Drawings

FIG. 1 illustrates an overall structure of the present invention.
FIG. 2 illustrates data configuration of BD-R/RE.
FIG. 3 illustrates data configuration of HD-DVD-R/RW.
FIG. 4 illustrates data configuration of BD9-R/RE.
FIG. 5 illustrates data configuration of HD-DVD9-R/RW.
FIG. 6 illustrates a functional block diagram of a drive according to the first embodiment.
FIG. 7 is a flowchart illustrating the operation of the drive according to the first embodiment.
FIG. 8 illustrates a functional block diagram of a drive according to the second embodiment.
FIG. 9 is a flowchart illustrating the operation of the drive according to the second embodiment.
FIG. 10 illustrates a functional block diagram of the drive according to the third embodiment.
FIG. 11 is a flowchart illustrating the operation of the drive according to the third embodiment.
FIG. 12 illustrates a functional block diagram of the drive and the host according to the fourth embodiment.
FIG. 13 is a flowchart illustrating the operation of the drive according to the fourth embodiment.
FIG. 14 illustrates a functional block diagram of the drive according to the fifth embodiment.
FIG. 15 is a flowchart illustrating the operation of the drive according to the fifth embodiment.

### Numerical References

10 Drive
11 Readout unit
12 Media type identifying unit
13 Data analysis unit
14 Authentication unit
15 Input and output unit
20 Drive
21 Readout and writing unit
22 Media type identifying unit
23 Old-new comparison unit
24 Updating unit
25 HRL storage unit
26 Authentication unit
27 Input and output unit
30 Drive
31 Readout unit
32 Media type identifying unit
33 ID extension unit
34 Input and output unit
40 Drive
41 Readout and writing unit
42 Media type identifying unit
43 Input and output unit
50 Host
51 Input and output unit
52 MKB request and reception unit
53 MKB old-new comparison unit
54 Updating unit
55 MKB storage unit
56 Updating unit
57 MKB request and reception unit
58 MKB old-new comparison unit
60 Drive
61 Readout unit
62 Media type identifying unit
63 Analog signal processing unit
64 Key transformation data generating unit
65 Demodulator
66 Demodulator
67 Error correction unit
68 Error correction unit
69 Key transformation data generating unit
70 Input and output unit
M Media
S, S1, S2 Switch

### Best Mode for Carrying Out the Invention

Embodiments of the present invention will be described in detail as follows with reference to the drawings.

### (First Embodiment)

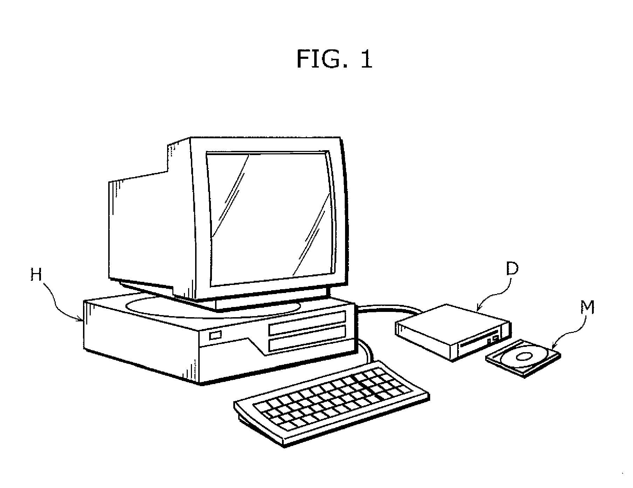

FIG. 1 illustrates an overall structure of the present invention.

As shown in FIG. 1, the present invention can be applied to a recording and reproduction apparatus such as a drive D which reads and writes information from and to a recording media M, and can also be applied to a host apparatus H such as a personal computer, connected to the drive D. Here, although the drive D is illustrated as an external apparatus of the host apparatus H, the drive D may be embedded in the host apparatus H. The present invention is also applicable to a recorder in which the drive D and the host H are integrated. The detail of the embodiments of the present invention will be described in detail assuming that the recording medium M uses the AACS as the copyright protection scheme.

First, the points where the AACS is dependent of the type of recording medium (media) is explained.

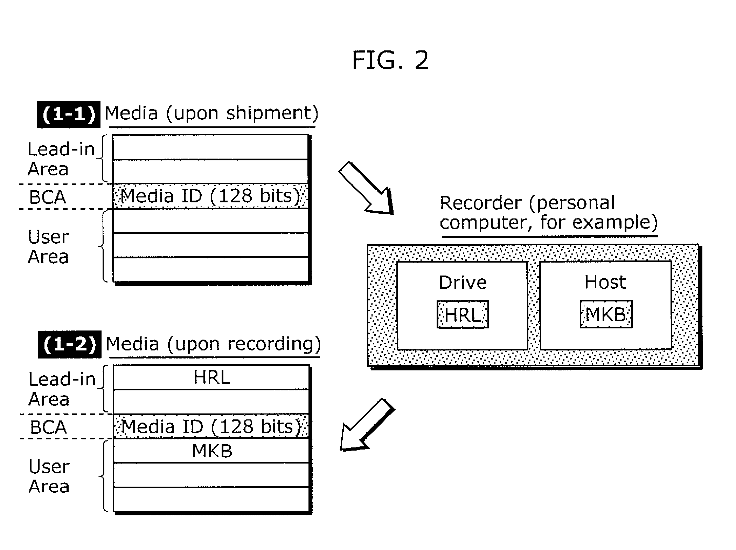

FIG. 2 illustrates data configuration of BD-R/RE.

BD-R/RE is an example of a recording medium according to the present invention, and includes "Lead-in Area", "BCA", and "User Area". The "Lead-in Area" and the "BCA" are areas where the user cannot read or write freely, and the "User Area" is an area where the user can read or write freely. As shown in FIG. 2, a media ID which is an identifier unique to each media is recorded on the "BCA" upon shipment from the factory. Nothing is recorded on the "Lead-in Area" and the "User Area".

The drive stores a Host Revocation List (HRL). The HRL is a host revocation list used for an authentication between the drive and the host, and IDs of the hosts to be revoked are recorded. The host stores a Media Key Block (MKB). The MKB is key information used for encrypting and decrypting the contents, and revokes invalid keys. Both the HRL and the MKB are information related to the copyright protection. The HRL stored in the drive is recorded on the "Lead-in Area" of the media when recording data on the media or when initializing the media. The MKB stored in the host is also recorded on the "User Area" of the media when recording data on the media or when initializing the media.

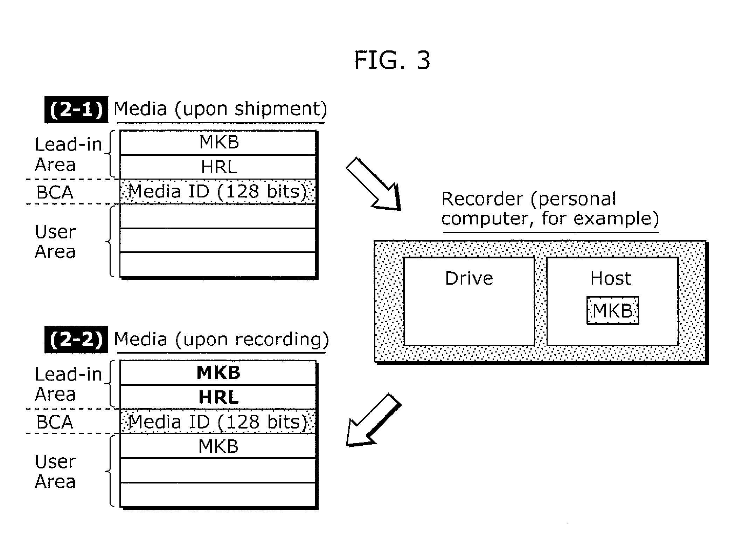

FIG. 3 illustrates data configuration of HD-DVD-R/RW.

HD-DVD-R/RW is an example of a recording medium according to the present invention, and includes "Lead-in Area", "BCA", and "User Area". As shown in FIG. 3, the MKB and the HRL are recorded on the "Lead-in Area", and the media ID is recorded on the "BCA", upon shipment from the factory. Nothing is recorded on the "User Area". The host stores the MKB. The MKB stored in the host is also recorded on the "User Area" of the media when recording data on the media or when initializing the media.

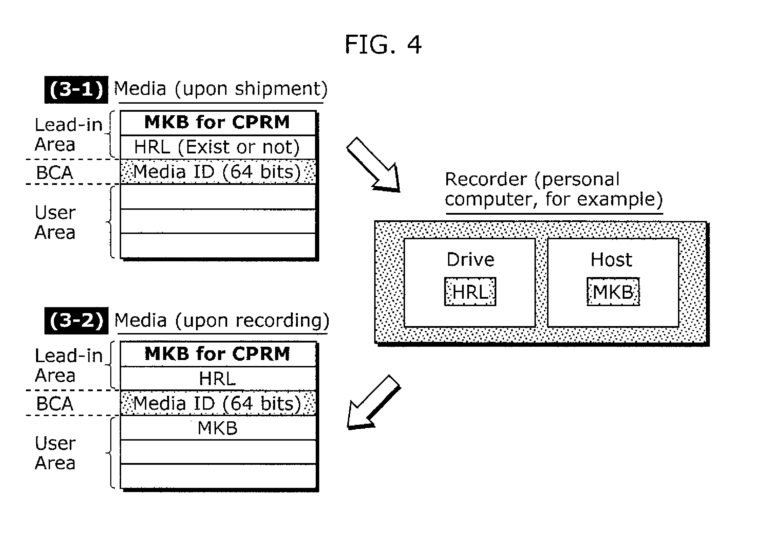

FIG. 4 illustrates data configuration of BD9-R/RE.

BD-9R/RE is an example of a recording medium according to the present invention, and includes "Lead-in Area", "BCA", and "User Area". BD9 is a current DVD in which information is recorded using the format for BD. As shown in FIG. 4, the "MKB for CPRM" is recorded on the "Lead-in Area", and the media ID is recorded on the "BCA", upon shipment from the factory. The "MKB for CPRM" indicates an MKB for the Content Protection for Recordable Media (CPRM). The CPRM is a copyright protection scheme adapted to conventional DVDs and others. When simply referred to as the "MKB", it denotes an MKB for the AACS. The HRL may be recorded on the "Lead-in Area". More specifically, no HRL is recorded on DVDs that have already been in the market, however, it is possible that the HRL will be recorded on DVDs that will be manufactured in the future.

Similar to the case of BD, there is a case where the HRL is recorded on the drive and the MKB is recorded in the host. When the HRL recorded on the drive is the newest HRL, more specifically, when the HRL stored in the drive is newer than the HRL recorded on the "Lead-in Area" of the media, the HRL stored in the drive is recorded on the "Lead-in Area" of the media when recording the data on the media or when initializing the media. The MKB stored in the host is also recorded on the "User Area" of the media when recording data on the media or when initializing the media.

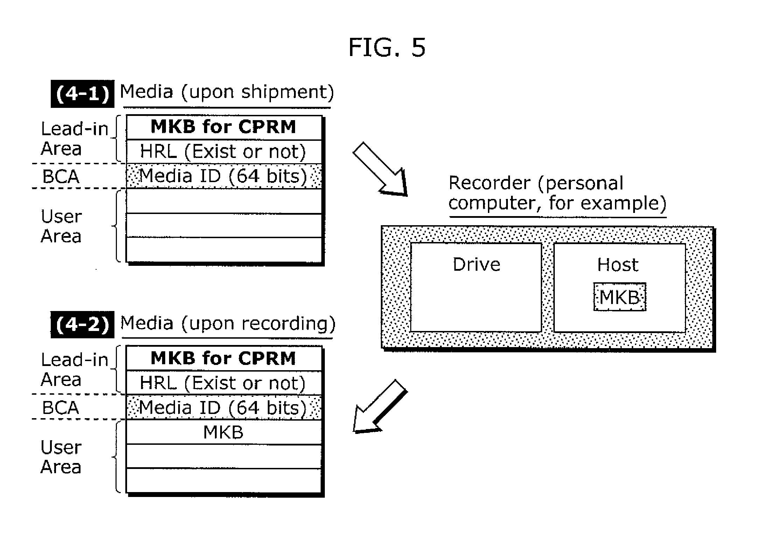

FIG. 5 illustrates data configuration of HD-DVD9-R/RW.

HD-DVD9-R/RW is an example of a recording medium according to the present invention, and includes "Lead-in Area", "BCA", and "User Area". The HD-DVD9 is a current DVD in which information is recorded using the format for HD-DVD. As shown in FIG. 5, the "MKB for CPRM" is recorded on the "Lead-in Area", and the media ID is recorded on the "BCA", upon shipment from the factory. The HRL may be recorded on the "Lead-in Area". More specifically, no HRL is recorded on DVDs that have already been in the market, however, it is possible that the HRL will be recorded on DVDs that will be manufactured in the future. Furthermore, when no HRL is recorded on the media, the drive, for example, performs authentication, judging that there is no host to be revoked.

Similar to the case of the HD-DVD, the HRL is not stored in the drive. However, there are cases where the MKB is stored in the host. The MKB stored in the host is also recorded on the "User Area" of the media when recording data on the media or when initializing the media.

In the AACS, when authentication is performed between the host and the drive, the HRL recorded on the media is read by the drive. The HRL that has been read is used for authentication between the host and the drive. Here, as shown in FIGS. 2 to 5, there are cases where the HRLs are recorded on different areas, depending on the type of media. In the first embodiment, an embodiment where the HRL is read according to the type of media will be explained.

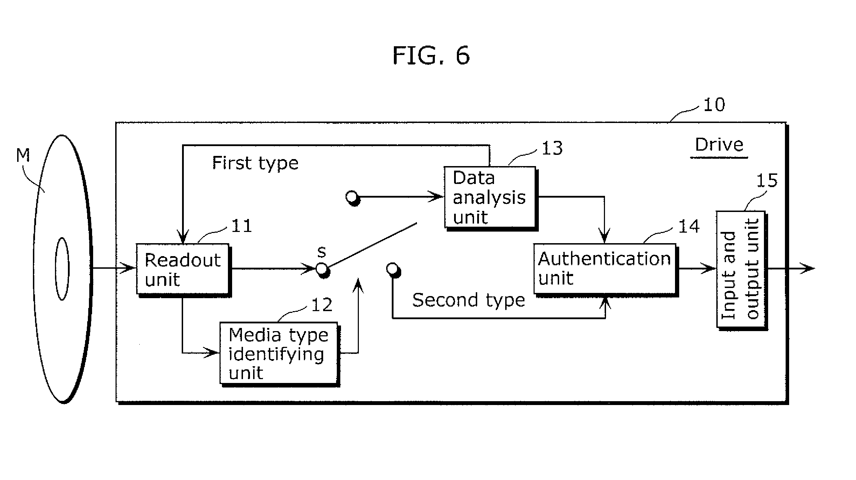

FIG. 6 illustrates a functional block diagram of the drive 10 according to the first embodiment.

The drive 10 is an example of the recording and reproduction apparatus according to the present invention, and includes a readout unit 11, a media type identifying unit 12, a data analysis unit 13, an authentication unit 14, and an input and output unit 15. The readout unit 11 is an example of the reading and writing unit according to the present invention, and reads and writes information from and to the media M. The media type identifying unit 12 is an example of the identifying unit according to the present invention, and identifies whether the type of the media M is a first type or a second type based on the information read from the media M by the readout unit 11. The data analysis unit 13 is an example of the copyright protection unit according to the present invention, and analyzes the data read by the readout unit 11. The authentication unit 14 is an example of the authentication unit according to the present invention, and performs authentication between the drive 10 and the host (not shown) connected to the drive 10. The input and output unit 15 inputs and outputs information to and from the host. In the first embodiment, HD-DVD-R/RW, BD9-R/RE, and HD-DVD9-R/RW are exemplified as the media M of the first type and BD-R/RE is exemplified as the media M of the second type. It is needless to say that the type of media M is not limited to the examples listed above.

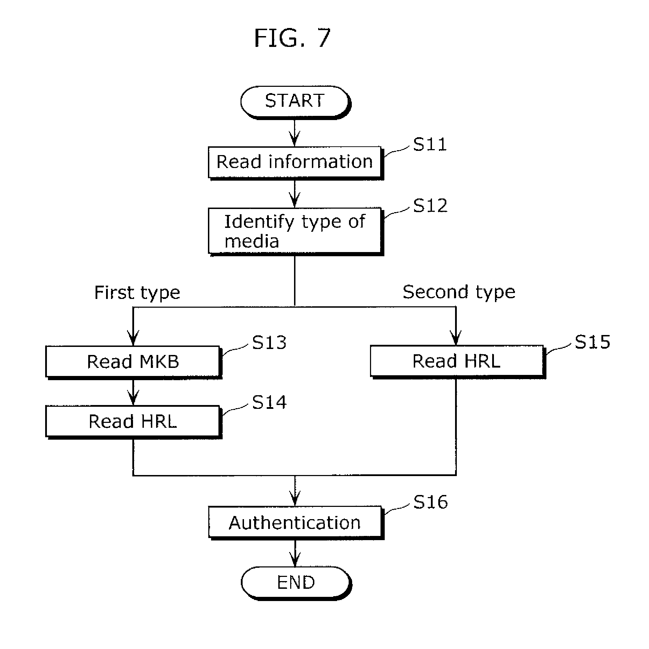

FIG. 7 is a flowchart illustrating the operation of the drive 10 according to the first embodiment.

First, the readout unit 11 reads information from the media M (S11), and transmits the information that has been read to the media type identifying unit 12. The media type identifying unit 12 identifies whether the type of the media M is HD-DVD-R/RW, BD9-R/RE, or HD-DVD9-R/RW, or BD-R/RE based on the information read from the media M by the readout unit 11.

There are various methods to identify the type of media, and the methods are not particularly limited. For example, (1) difference in physical media, (2) difference in properties of physical media, or (3) difference in application layers is identified. (1) The difference in the physical media refers to, for example, whether the media is a BD, an HD-DVD, or a DVD. (2) The difference in the property of the physical media refers to the difference, for example, whether the physical media is read-only memory (ROM), or writable memory (R/RE/RW). The difference in the application layers refers to the difference, for example, whether the data is recorded on the recording format of BD or the format of HD-DVD. Subsequently, the type of media is identified by the difference indicated by the combination of (1), (2), and (3). For example, the result of identifying the difference in the physical media (1) indicates that the media is a BD. Furthermore, the result of identifying the difference in the property of physical media (2) indicates the physical media is a read only memory (ROM). Furthermore, the result of identifying the difference of the application layers (3) indicates that the data is recorded using the recording format of BD. In this case, it is identified that the type of the media is BD-ROM.

There are various methods for identifying the difference shown in (1), (2), and (3), and the methods are not particularly limited. For example, fundamental difference such as the difference in CD/DVD/BD/HD-DVD can be checked through trial and error. Subsequently, the difference of ROM/R/RW may be checked by checking "Book Type". The "Book Type" is a type of media (ID) recorded on a predetermined area on the media M. Alternatively, various methods, for example, a method for detecting a wobble to distinguish ROM and R/RW, and a method for detecting PUSH/PULL signal can be used.

Here, when the media type identifying unit 12 identifies that the type of the media M is one of HD-DVD-R/RW, BD9-R/RE, and HD-DVD9-R/RW, the media type determining unit 12 switches a switch S so that the readout unit 11 and the data analysis unit 13 are connected. More specifically, when the type of the media M is one of HD-DVD-R/RW, BD9-R/RE, and HD-DVD9-R/RW, the MKB ("MKB for CPRM" in the case of BD9-R/RE and HD-DVD9-R/RW) and the HRL is recorded on the "Lead-in Area" of the media M in that order. Since the size of the MKB is variable, the data analysis unit 13 calculates the size of the MKB read by the readout unit 11 (S13). Subsequently, record location of the HRL on the media M is analyzed based on the calculated size of MKB and the analysis result 13 notifies the readout unit 11 of the analysis result. The readout unit 11 reads the HRL from the notified record location (S14). The read HRL is transmitted to the authentication unit 14 via the data analysis unit 13, and authentication is performed by the authentication process unit 14 (S16).

Meanwhile, when the type of the media M is identified as BD-R/RE, the media type identifying unit 12 switches the switch S so that the readout unit 11 and the authentication unit 14 are connected. More specifically, when the type of the media M is BD, only the HRL is recorded on the "Lead-in Area" of the media M, and thus the HRL can be directly read from the media M (S15). Subsequently, the HRL read by the readout unit 11 is directly transmitted to the authentication unit 14, and authentication is performed by the authentication unit 14 (S16).

As described above, according to the first embodiment, it is possible to read the HRL using a method according to the type of the media M. Therefore, it is possible to provide a universal drive which is capable of recording and reproducing high image quality contents on various media such as BD, HD-DVD, and DVD according to the AACS.

Note that the switch S may not be a physical switch, but may be a control unit which switches processes according to the identification result of the media type identifying unit 12.

### (Second Embodiment)

There are cases where the versions of the HRL recorded on the media and the HRL stored in the drive are different. In response to this, in the second embodiment, an embodiment for updating the HRLs based on a method according to the type of media is explained. Note that the description common to the first embodiment shall be omitted in the following description.

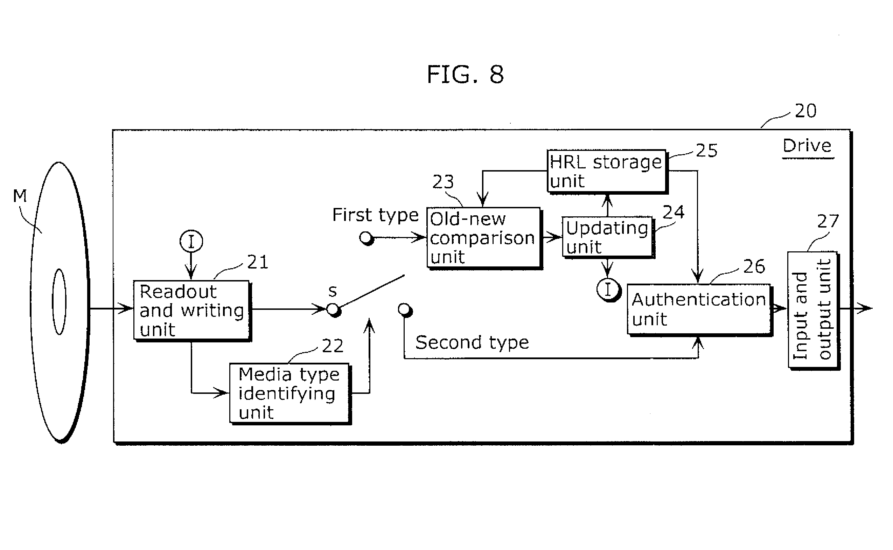

FIG. 8 illustrates a functional block diagram of the drive 20 according to the second embodiment.

The drive 20 is an example of the recording and reproduction apparatus according to the present invention, and includes a readout and writing unit 21, a media type identifying unit 22, an old-new comparison unit 23, an updating unit 24, an HRL storage unit 25, a authentication unit 26, and an input and output unit 27. The readout and writing unit 21 is an example of the reading and writing unit according to the present invention, and reads and writes information from and to the media M. The media type identifying unit 22 is an example of the identifying unit according to the present invention, and identifies whether the type of the media M is a first type or a second type based on the information read from the media M by the readout and writing unit 21. The old-new comparison unit 23 is an example of the comparison unit according to the present invention, and when the media type identifying unit identifies the type of the media M as the first type, reads the HRL from the media M via the readout and writing unit 21, and compares (a) the HRL that has been read and (b) the HRL stored in the HRL storage unit 25 to identify the newest HRL. The updating unit 24 is an example of the updating unit according to the present invention, and stores the newest HRL identified in the comparison by the old-new comparison unit 23 in the HRL storage unit 25, or updates the HRL recorded on the media M via the readout and writing unit 21. The HRL storage unit 25 is an example of the storage unit according to the present invention, and stores the HRL. The authentication unit 26 is an example of the authentication unit according to the present invention, and perform authentication with the host (not shown) connected to the drive 10 using the newest HRL identified in the comparison by the old-new comparison unit 23. The input and output unit 27 inputs and outputs information to and from the host. In the second embodiment, BD-R/RE and BD9-R/RE are exemplified as the media M of the first type, and HD-DVD-R/RW and HD-DVD9-R/RW are exemplified as the media M of the second type. It is needless to say that the type of media M is not limited to the examples listed above.

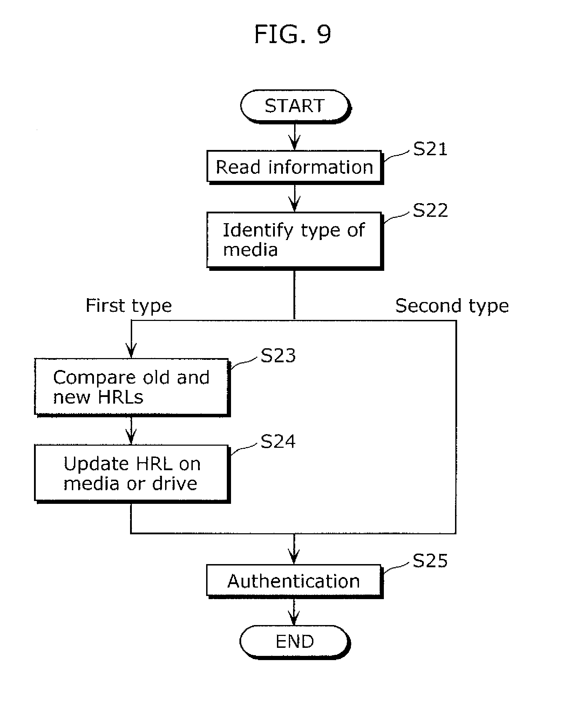

FIG. 9 is a flowchart illustrating the operation of the drive 20 according to the second embodiment.

First, the readout unit 21 reads information from the media M (S21), and transmits the information that has been read to the media type identifying unit 22. The media type identifying unit 22 identifies whether the type of the media M is BD-R/RE, BD9-R/RE, or HD-DVD9-R/RW based on the information read from the media M by the readout and writing unit 21.

Here, when the media type identifying unit 22 identifies that the type of the media M is one of BD-R/RE or BD9-R/RE, the media type determining unit 22 switches the switch S so that the readout and writing unit 21 and the old-new comparison unit 23 are connected. Subsequently, the old-new comparison unit 23 reads the HRL from the media M via the readout and writing unit 21. The old-new comparison unit 23 then compares (a) the read HRL and (b) the HRL stored in the HRL storage unit 25 to identify the newest HRL (S23), and the old-new comparison unit 23 notifies the updating unit 24 of the comparison result. The updating unit 24 updates the HRL on the media M or the drive 20 based on the notified comparison result (S24). More specifically, when the HRL recorded on the media M is the newest HRL, the HRL recorded on the media M is stored in the HRL storage unit 25. On the other hand, when the HRL stored in the HRL storage unit 25 is the newest HRL, the HRL stored in the HRL storage unit 25 is recorded on the media M. The authentication unit 26 performs authentication using the newest HRL (S25).

Meanwhile, when the media type identifying unit 22 identifies the type of the media M as HD-DVD-R or HD-DVD9-R/RW, the media type identifying unit 22 switches the switch S so that the readout and writing unit 21 and the authentication unit 26 are connected. More specifically, when the type of the media M is one of HD-DVD-R/RW, HD-DVD9-R/RW, the HRL recorded on the media M is not updated. Here, the authentication unit 26 performs authentication using the HRL read by the readout and writing unit 21 (S25).

As described above, according to the second embodiment, it is possible to update the HRL stored in the drive using a method according to the type of the media M. Therefore, it is possible to provide a universal drive which is capable of recording and reproducing high image quality contents on various media such as BD, HD-DVD, and DVD according to the AACS.

### (Third Embodiment)

There are cases where bit lengths of the media ID differ depending on the type of media. When the host requests the drive to transmit the media ID, adjusting the bit lengths of media IDs on the drive side allows the host to obtain a media ID of a predetermined length regardless of the type of the media, which simplifies the structure of the host. Thus, in the third embodiment, an embodiment for extending the media ID based on a method according to the type of media shall be explained. Note that the description common to the first embodiment shall be omitted in the following description.

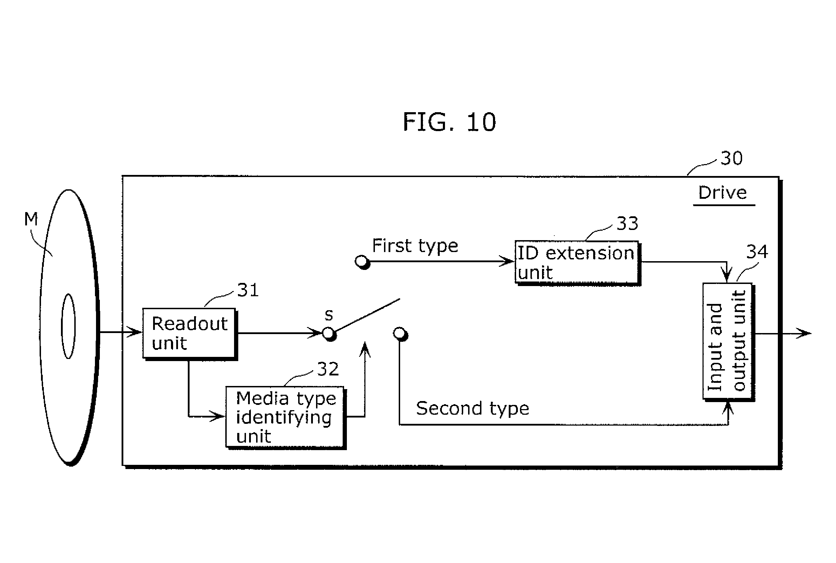

FIG. 10 illustrates a functional block diagram of the drive 30 according to the third embodiment.

The drive 30 is an example of the recording and reproduction apparatus according to the present invention, and includes a readout unit 31, a media type identifying unit 32, an ID extension unit 33, and an input and output unit 34. The readout unit 31 is an example of the reading and writing unit according to the present invention, and reads and writes information from and to the media M. The media type identifying unit 32 is an example of the identifying unit according to the present invention, and identifies whether the type of the media M is a first type or a second type based on the information read from the media M by the readout unit 31. The ID extension unit 33 is an example of the ID extension unit according to the present invention. When the media type identifying unit 32 identifies the type of the media M as the first type, the ID extension unit 33 performs bit-extension on the media ID read from the media M by the readout unit 31. When (a) the media type identifying unit 32 identifies the type of media M as the first type, the input and output unit 34 transmits the media ID bit-extended by the ID extension unit 33 to the host, and (b) the media type identifying unit 32 identifies the type of media M as the second type, the input and output unit 34 transmits the media ID read by the readout unit 31 to the host. In the third embodiment, BD9-R/RE, HD-DVD9-R/RW are exemplified as the media M of the first type, and BD-R/RE, HD-DVD-R/RW are exemplified as the media M of the second type. It is needless to say that the type of media M is not limited to the examples listed above.

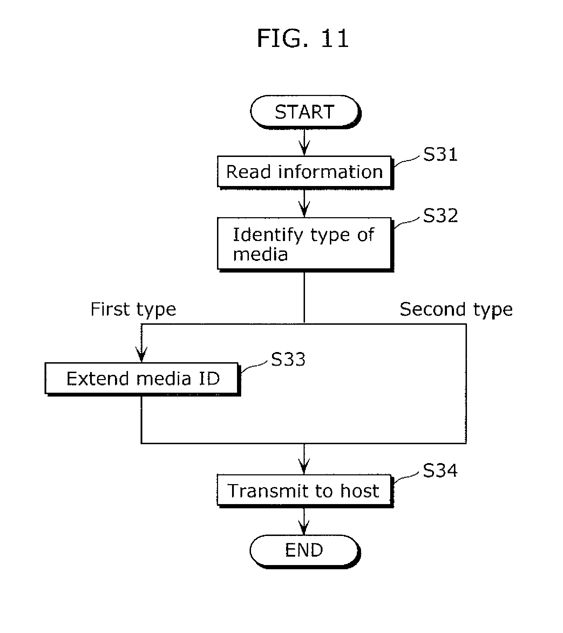

FIG. 11 is a flowchart illustrating the operation of the drive 30 according to the third embodiment.

First, the readout unit 31 reads information from the media M (S31), and transmits the information that has been read to the media type identifying unit 32. The media type identifying unit 32 identifies whether the type of the media M is BD9-R/RE, HD-DVD9-R/RW or BD-R/RE, HD-DVD-R/RW based on the information read from the media M by the readout unit 31 (S32).

Here, when the media type identifying unit 32 identifies that the type of the media M is BD9-R/RE or HD-DVD9-R/RW, the media type determining unit 32 switches a switch S so that the readout unit 31 and the ID extension unit 33 are connected. When the type of the media M is BD9-R/RE or HD-DVD9-R/RW, a 64-bit media ID is recorded on the "BCA" on the media M. Here, the ID extension unit 33 reads the media ID from the "BCA" on the media M via the readout unit 31. Subsequently, the read media ID is extended to 128 bits (S33), and the bit-extended media ID is transmitted to the input and output unit 34. The input and output unit 34 transmits the bit-extended media ID to the host (S34). The method for bit-extension is not particularly limited, and may be performed by any method as long as uniqueness of the media ID is assured. For example, by connecting two 64-bit media IDs can produce a 128-bit media ID.

Meanwhile, when the type of the media M is identified as BD-R/RE or HD-DVD-R/RW, the media type identifying unit 32 switches the switch S so that the readout unit 31 and the input and output unit 34 are connected. When the type of media M is BD or HD-DVD, a 128-bit media ID is recorded on the "BCA" on the media M. In this case, the input and output unit 34 transmits the 128-bit media ID read by the readout unit 31 to the host (S34).

As described above, according to the third embodiment, it is possible to extend media ID using a method according to the type of the media. Therefore, it is possible to provide a universal drive which is capable of recording and reproducing high image quality contents on various media such as BD, HD-DVD, and DVD according to the AACS.

### (Fourth Embodiment)

There are cases where the version of MKB recorded on the media and the version of MKB stored in the host are different. In response to this, in the fourth embodiment, an embodiment for updating the MKB based on a method according to the type of media shall be explained. Note that the description common to the first embodiment will be omitted in the following description.

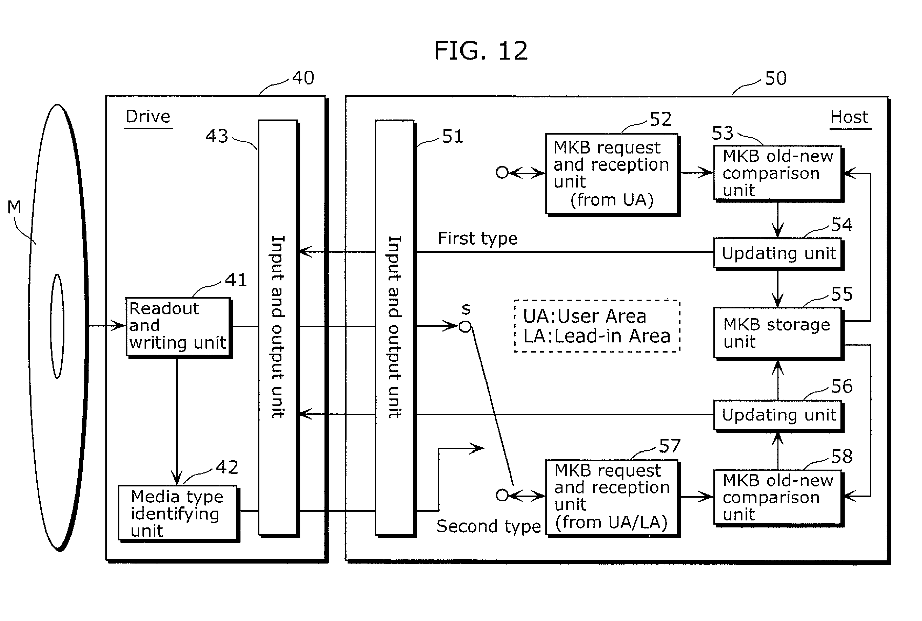

FIG. 12 illustrates a functional block diagram of a drive 40 and a host 50 according to the fourth embodiment.

The drive 40 is an example of the recording and reproduction apparatus according to the present invention, and includes a readout and writing unit 41, a media type identifying unit 42, and an input and output unit 43. The readout and writing unit 41 is an example of the reading and writing unit according to the present invention, and reads and writes information from and to the media M. The media type identifying unit 42 is an example of the identifying unit according to the present invention, and identifies whether the type of the media M is a first type or a second type based on the information read from the media M by the readout and writing unit 41. The input and output unit 44 is an example of the second input and output unit according to the present invention, and inputs and outputs information to and from the host 50. More specifically, the input and output unit 44 transmits record information whether or not the MKB is recorded on the "User Area" on the media M is recorded, and the type information of the media M to the host 50 as the information regarding the media M.

The host 50 is an example of the host apparatus according to the present invention, and includes an input and output unit 51, and MKB request and reception unit 52, an MKB old-new comparison unit 53, an updating unit 54, an MKB storage unit 55, an updating unit 56, an MKB request and reception unit 57, and an MKB old-new comparison unit 58. The input and output unit 51 is an example of the first input and output unit according to the present invention, and inputs and outputs information to and from the drive 40. The MKB request and reception unit 52 is an example of the first key information reception unit according to the present invention, and when the type of the media M is the first type, obtains the MKB recorded on the "User Area" on the media M via the drive 40 and the input and output unit 51. The MKB old-new comparison unit 53 is an example of the first comparison unit according to the present invention, and when (a) the type of the media M is the first type, and (b) the MKB is recorded on the "User Area" on the media M, compares (a) the MKB obtained by the MKB request and reception unit 52 and (b) the MKB stored in MKB storage unit 55 to identify the newest MKB. The updating unit 54 is an example of the first updating unit according to the present invention, and when the type of media M is a first type and no MKB is recorded on the "User Area" on the media M, records the MKB stored in the MKB storage unit 55 on the "User Area" on the media M of the first type, according to the comparison result of the MKB old-new comparison unit 53 via the input and output unit 51 and the drive 40. Furthermore, the updating unit 54, when the type of the media M is the first type and the MKB is recorded on the "User Area" on the media M, records the newest MKB on the "User Area" of the media M of the first type or stores the MKB in the MKB storage unit 55, according to the comparison result of the MKB old-new comparison unit 53. The newest MKB is identified in the comparison by the MKB old-new comparison unit 53, and the newest MKB is recorded via the input and output unit 51 and the drive 40. The MKB storage unit 55 is an example of the storage unit according to the present invention, and stores MKBs. The MKB request and reception unit 57 is an example of the second key information reception unit according to the present invention, and when the type of the media M is the second type, obtains the MKB recorded on the "User Area" and the "Lead-in Area" on the media M via the drive 40 and the input and output unit 51. The MKB old-new comparison unit 58 is an example of the second comparison unit according to the present invention, and when (a) the type of the media M is the second type, and (b) no MKB is recorded on the "User Area" of the media M, compares the MKB obtained by the MKB request and reception unit 57 and the MKB stored in the MKB storage unit 55 to identify the newest MKB, and when (a) the type of the media M is the second type and (b) the MKB is recorded on the "User Area" on the media M, compares old and new of (a) the MKB recorded on the "User Area" obtained by the MKB request and reception unit 57 (b) the MKB recorded on the "Lead-in Area" on the media M, and (c) the MKB stored in the MKB storage unit 55. The updating unit 56 is the second updating unit according to the present invention, and when (a) the type of media M is the second type and (b) no MKB is recorded on the "User Area" on the media M, records the newest MKB identified in the comparison by the MKB old-new comparison unit 58 on the "User Area" of the media M of the second type, and stores the newest MKB on the MKB storage unit 55 according to the comparison result of the MKB old-new comparison unit 58 via the input and output unit 51 and the drive 40. Furthermore, when the type of the media M is the second type and the MKB is recorded on the "User Area" on the media M, the updating unit 56 records the newest MKB identified in the comparison by the MKB old-new comparison unit 58 according to the comparison result of the MKB old-new comparison unit 58 on the "User Area" on the media M of the second type, and/or stores in the MKB storage unit 55 via the input and output unit 51 and the drive 40. In the fourth embodiment, BD-R/RE, BD9-R/RW, and HD-DVD9-R/RW are exemplified as the media M of the first type and HD-DVD-R/RW is exemplified as the media M of the second type. It is needless to say that the type of media M is not limited to the examples listed above.

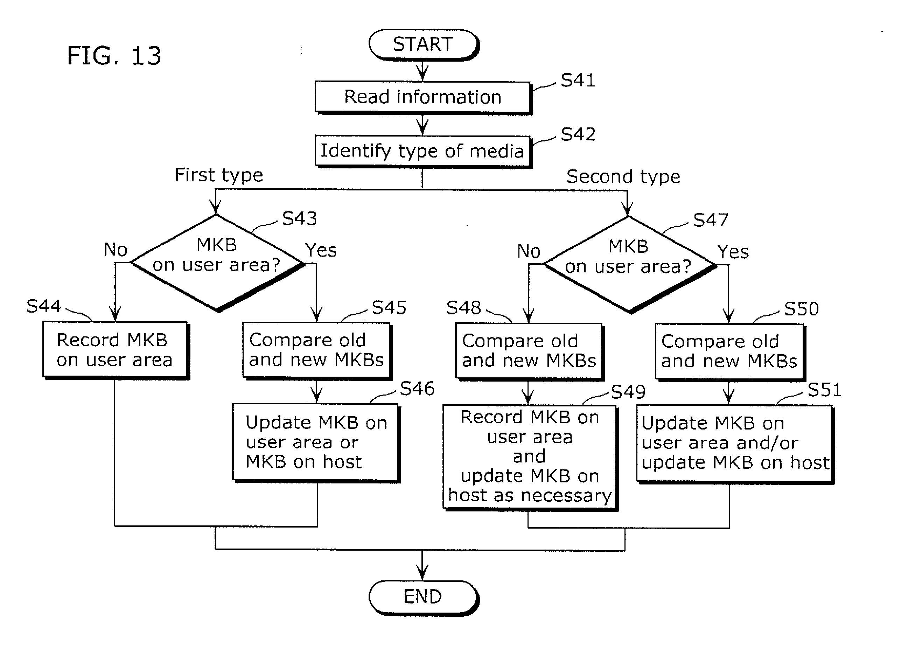

FIG. 13 is a flowchart illustrating the operation of the drive 40 according to the fourth embodiment.

First, the readout unit 41 reads information from the media M (S41), and transmits the information that has been read to the media type identifying unit 42. The media type identifying unit 42 identifies, whether the type of media is BD-R/RE, BD9-R/RE, or HD-DVD9-R/RW, HD-DVD-R/RW, and whether the MKB is recorded on the "User Area" on the media M (S42). The identification result is notified of the input and output unit 51 of the host 50 via the input and output unit 43.

Here, when the type of media M is one of BD-R/RE, BD9-R/RE, and HD-DVD9-R/RW, the input and output unit 51 switches the switch S such that the input and output unit 51 and the MKB request and reception unit 52 are connected. When the MKB is not recorded on the "User Area" on the media M (No in S43), the updating unit 54 records the MKB stored in the MKB storage unit 55 on the "User Area" on the media M. On the other hand, when the MKB is recorded on the "User Area" on the media M (Yes in S43), the MKB old-new comparison unit 53 compares (a) the MKB recorded on the "User Area" of the media M and (b) the MKB stored in the MKB storage unit 55 to identify the newest MKB (S45). With this, when the MKB recorded on the "User Area" on the media M is identified as the newest MKB, the updating unit 54 stores the MKB recorded on the "User Area" on the media M in the MKB storage unit 55 (S46). When the MKB stored in the MKB storage unit 55 is identified as the newest MKB, the MKB stored in the MKB storage unit 55 is recorded on the "User Area" of the media M (S46).

Meanwhile, when the type of the media M is identified as HD-DVD-R/RW, the input and output unit 51 switches the switch S so that the input and output unit 51 and the MKB request and reception unit 57 are connected. Furthermore, when the MKB is not recorded on the "User Area" of the media M (No in S47), the MKB old-new comparison unit 58 compares (a) the MKB recorded on the "Lead-in Area" on the media M and (b) the MKB stored in the MKB storage unit 55 to identify the newest MKB (S48). Thus, when (a) the MKB stored in the MKB storage unit 56 is identified as the newest MKB, the updating unit 56 records the MKB stored in the MKB storage unit 55 on the "User Area" on the media M, and (b) the MKB recorded on the "Lead-in Area" on the media M is identified as the newest MKB, the updating unit 56 records the MKB recorded on the "Lead-in Area" on the media M on the "User Area" on the media M and on the MKB storage unit (S49). On the other hand, when the MKB is recorded on the "User Area" on the media M (Yes in S47), the MKB old-new comparison unit 58 compares (a) the MKB recorded on the "Lead-in Area" of the media M and (b) the MKB stored in the MKB storage unit 55 to identify the newest MKB (S50). With this, when the MKB recorded on the "User Area" on the media M is identified as the newest MKB, the updating unit 56 stores the MKB recorded on the "User Area" on the media M in the MKB storage unit 55 (S51). Alternatively, when the MKB recorded on the "Lead-in Area" on the media M is identified as the newest MKB, the MKB recorded on the "Lead-in Area" on the media M is recorded on the "User Area" on the media M and is stored in the MKB storage unit 55 (S51). When the MKB stored in the MKB storage unit 55 is identified as the newest MKB, the MKB stored in the MKB storage unit 55 is recorded on the "User Area" on the media M (S51).

As described above, according to the fourth embodiment, it is possible to record the MKB using a method according to the type of the media. Therefore, it is possible to provide a universal drive which is capable of recording and reproducing high image quality contents on various media such as BD, HD-DVD, and DVD according to the AACS.

### (Fifth Embodiment)

There are cases where the user wishes to read volume ID (key transformation data) recorded on the media. The volume ID is an ID for identifying a stamper, and there are several methods to record the volume ID on the media. For example, the first method is a method of embedding the volume ID on the tracking signal as shown in FIG. 1b of USP No. 5,737,286 (patent reference 1). Alternatively, as the second method, there is a method of embedding the volume ID on the digital data shown in FIG. 18 of Japanese patent No. 3,779,580 (corresponding US application publication: No. US 2003-0061500) (patent reference 2). Accordingly, in the fifth embodiment, the volume ID is read according to the type of media, such as BD-ROM, HD-DVD-ROM, when the recording method of the volume ID differs depending on the type of media such as BD-ROM and HD-DVD-ROM. Note that the description common to the first embodiment will be omitted in the following description.

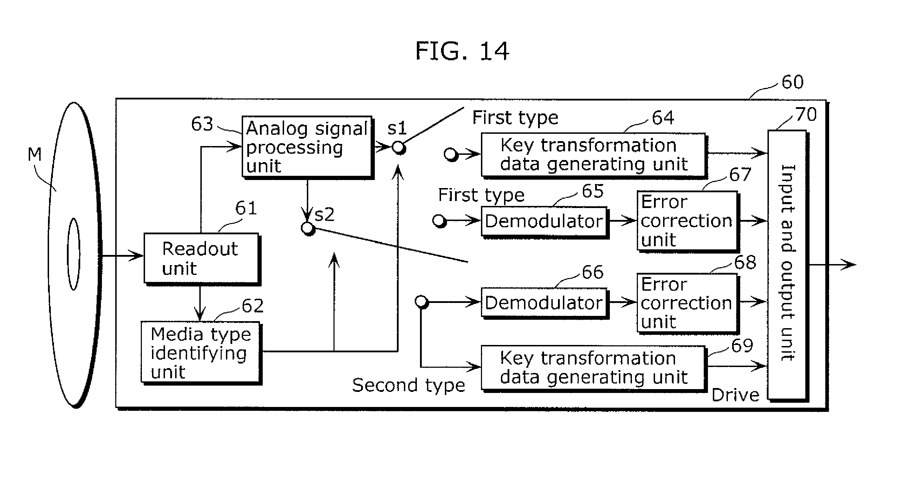

FIG. 14 illustrates a functional block diagram of the drive 60 according to the fifth embodiment.

The drive 60 is an example of the recording and reproduction apparatus according to the present invention, and includes a readout unit 61, a media type identifying unit 62, an analog signal processing unit 63, a key transformation data generating unit 64, a demodulator 65, an error correction unit 67, a demodulator 66, an error correction unit 68, a key transformation data generating unit 69, and an input and output unit 70. The readout unit 61 is an example of the reading and writing unit according to the present invention, and reads and writes information from and to the media M. The media type identifying unit 62 is an example of the identifying unit according to the present invention, and identifies whether the type of the media M is a first type or a second type based on the information read from the media M by the readout unit 61. The analog signal processing unit 63 is an example of the signal processing unit according to the present invention, and generates a sum signal for reading the digital information formed on the track on the media M and a differential signal which indicates a tracking error, based on the information read from the media M by the readout unit 61. The volume ID is embedded on the differential signal on the media M of the first type, while the volume ID is embedded on the sum signal on the media M of the second type. Here, when the media type identifying unit 62 identifies the type of media M as the first type, the analog signal processing unit 63 switches the switches S1 and S2 such that the sum signal outputted from the analog signal processing unit 63 is inputted to the demodulator 65, and the differential signal output from the analog signal processing unit 63 is input to the key transformation data generating unit 64. Furthermore, when the media type identifying unit 62 identifies the type of media M as the second type, the analog signal processing unit 63 switches the switches S1 and S2 such that the sum signal output from the analog signal processing unit 63 is input to the demodulator 66 and the key transformation data generating unit 69. The input and output unit 70 transmits volume ID generated by the key transformation data generating unit 64 or 69 and demodulation data on which error correction is performed by the error correction unit 67 or 68 to the host. The key transformation data generating unit 64 is an example of the first volume ID generating unit according to the present invention, and demodulates the volume ID recorded on the media M of the first type. The demodulator 65 is an example of the first demodulator according to the present invention, and demodulates data recorded on the media M of the first type. The error correction unit 67 performs error correction on the input signal from the demodulator 65, and outputs the corrected signal to the input and output unit 70. The key transformation data generating unit 69 is an example of the second volume ID generating unit according to the present invention, and demodulates the volume ID recorded on the media M of the second type. The demodulator 66 is an example of the second demodulator according to the present invention, and demodulates data recorded on the media M of the second type. The error correction unit 68 performs error correction on the input signal from the demodulator 66, and outputs the corrected signal to the input and output unit 70.

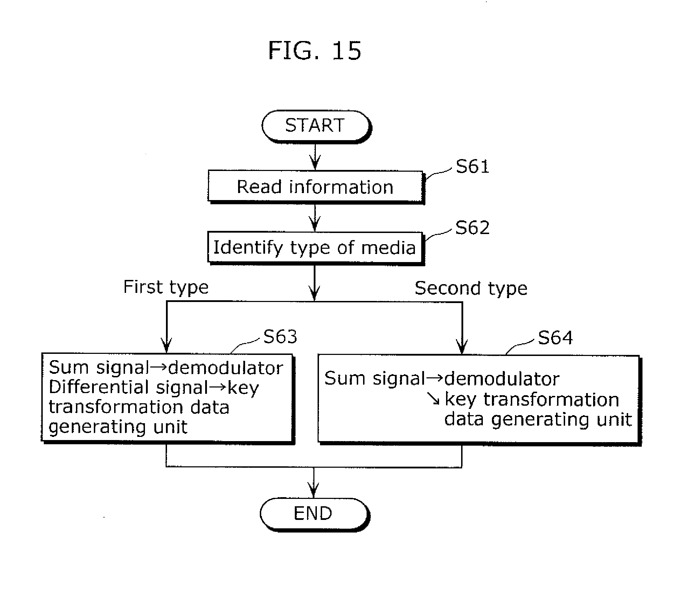

FIG. 15 is a flowchart illustrating the operation of the drive 60 according to the fifth embodiment.

First, the readout unit 61 reads information from the media M (S61), and transmits the information that has been read to the media type identifying unit 62. The media type identifying unit 62 identifies whether the type of the media M is a first type or a second type based on the information read from the media M by the readout unit 61 (S62).

Here, when the type of media M is identified as the first type, the analog signal processing unit 63 switches the switch S1 such that the analog signal processing unit 63 and the key transformation data generating unit 64 are connected, and switches the switch S2 such that the analog signal processing unit 63 and the demodulator 65 are connected. Thus, the sum signal output from the analog signal processing unit 63 is demodulated by the demodulator 65, and subsequently error-corrected by the error correction unit 67 (S63). Furthermore, the differential signal output from the analog signal processing unit 63 is input to the key transformation data generating unit 64, and the volume ID is generated by the key transformation data generating unit 64 (S63).

On the other hand, when the type of media M is identified as the second type, the analog signal processing unit 63 switches the switches S1 and S2 such that the analog signal processing unit 63, the demodulator 66, and the key transformation data generating unit 69 are connected. Thus, the sum signal output from the analog signal processing unit 63 is demodulated by the demodulator 66, and subsequently error-corrected by the error correction unit 68 (S64). Furthermore, the sum signal output from the analog signal processing unit 63 is input to the key transformation data generating unit 69, and the volume ID is generated by the key transformation data generating unit 69 (S64).

As described above, according to the fifth embodiment, it is possible to read (generate) volume ID using a method according to the type of the media. Therefore, it is possible to provide a universal drive which is capable of recording and reproducing high image quality contents on various media such as BD, HD-DVD, and DVD according to the AACS.

### Industrial Applicability

The present invention is applicable, for example, to recorders which require recording and reproducing of high image quality contents on and from various media including BD, HD-DVD, DVD and others according to the AACS.

## Claims

1. A recording and reproduction apparatus connected to a host apparatus, which reads information from and writes the information onto a recording medium, said recording and reproduction apparatus comprising:
a reading and writing unit configured to read and write the information from and onto the recording medium;
an identifying unit configured to identify a type of the recording medium based on the information read from the recording medium by said reading and writing unit; and
a copyright protection unit configured to perform an operation for copyright protection associated with a result of the identification by said identifying unit.

2. The recording and reproduction apparatus according Claim 1,
wherein said identifying unit is configured to identify the type as a first type or a second type,
said copyright protection unit includes:
a storage unit in which a host revocation list is stored;
a comparison unit configured to read a host revocation list from the recording medium via said reading and writing unit and to compare (a) the host revocation list that has been read and (b) the host revocation list stored in said storage unit to identify a newest host revocation list, when said identifying unit identifies the type as the first type;
an updating unit configured (a) to store, in said storage unit, the newest host revocation list identified in the comparison by said comparison unit, or (b) to update, via said reading and writing unit, the host revocation list recorded on the recording medium, according to a result of the comparison by said comparison unit; and
an authentication unit configured to perform authentication with the host apparatus using the newest host revocation list identified in the comparison by said comparison unit.

3. The recording and reproduction apparatus according Claim 1,
wherein said identifying unit is configured to identify the type as a first type or a second type,
said reading and writing unit is configured to read a unique disc identifier from the recording medium, and
said copyright protection unit includes:
an ID extension unit configured to perform bit-extension on the unique disc identifier that has been read from the recording medium by said reading and writing unit, when said identifying unit identifies the type as the first type; and
an input and output unit configured to transmit the unique disc identifier bit-extended by said ID extension unit to the host apparatus when said identifying unit identifies the type as the first type, and to transmit the unique disc identifier read from the recording medium by said reading and writing unit to the host apparatus when said identifying unit identifies the type as the second type.

4. A host apparatus connected to a recording and reproduction apparatus which reads information from and writes the information to a recording medium, said host apparatus comprising:
a first input and output unit configured to input and output the information to and from the recording and reproduction apparatus; and
a copyright protection unit configured to perform an operation for copyright protection associated with a type of the recording medium based on information related to the recording medium, the information being received from the recording and reproduction apparatus via said first input and output unit,
wherein the recording and reproduction apparatus includes a second input and output unit configured to input and output the information to and from said host apparatus,
the second input and output unit is configured to transmit record information and type information to said host apparatus as the information related to the recording medium, the record information indicating whether or not key information is recorded on a user area of the recording medium, and the type information indicating whether a type of the recording medium is the first type or the second type, and said copyright protection unit includes:
a storage unit configured to store key information;
a first key information reception unit configured to obtain the key information recorded on the user area of a recording medium of the first type via the recording and reproduction apparatus and said first input and output unit; and
a second key information reception unit configured to obtain the key information recorded on the user area of a recording medium of the second type and the key information recorded on a lead-in area of the recording medium of the second type via the recording and reproduction apparatus and said first input and output unit.

5. The host apparatus according to Claim 4,
wherein said copyright protection unit further includes:
a first comparison unit configured to compare the key information obtained by said first key information reception unit and the key information stored in said storage unit to identify newest key information when (a) the type information indicates the first type and (b) the record information indicates that the key information is recorded on the user area of the recording medium;
a first updating unit configured (i) to record the key information stored in said storage unit on the user area of the recording medium of the first type via said first input and output unit and the recording and reproduction apparatus, when (i-1) the type information indicates the first type and (i-2) the record information indicates that the key information is not recorded on the user area of the recording medium, and (ii) to record the newest key information identified in the comparison by said first comparison unit on the user area of the recording medium of the first type or store the newest key information on said storage unit, according to a result of the comparison by said first comparison unit, when (ii-1) the type information indicates the first type and (ii-2) the record information indicates that the key information is recorded on the user area on the recording medium;
a second comparison unit configured to compare (i) the key information on the lead-in area obtained by said second key information reception unit and the key information stored in said storage unit to identify the newest key information, when (i-1) the type information indicates the second type and (i-2) the record information indicates that the key information is not recorded on the user area of the recording medium, and (ii) (a) the key information on the user area, (b) the key information on the lead-in area obtained by said second key information reception unit and (c) the key information stored in said storage unit to identify the newest key information, when (ii-1) the type information indicates the second type and (ii-2) the record information indicates that the key information is recorded on the user area of the recording medium; and
a second updating unit configured (i) (a) to record the newest key information identified in the comparison by said second comparison unit, on the user area of the recording medium of the second type via said first input and output unit and the recording and reproduction apparatus and (b) to store, according to a result of the comparison by said second comparison unit, the newest key information on said storage unit, when (i-1) the type information indicates the second type and (i-2) the record information indicates that the key information is not recorded on the user area of the recording medium, and (ii) (a) to record the newest key information identified in the comparison by said second comparison unit on the user area of the recording medium of the second type via said first input and output unit and the recording and reproduction apparatus and/or (b) to store the newest key information on said storage unit, when (ii-1) the type information indicates the second type and (ii-2) the record information indicates that the key information is recorded on the user area of the recording medium, according to a result of the comparison by said second comparison unit.

6. The recording and reproduction apparatus according to Claim 1,
wherein said identifying unit is configured to identify the type as a first type or a second type,
said copyright protection unit includes:
a signal processing unit configured to generate a sum signal and a differential signal based on the information read by said reading and writing unit, the sum signal being for reading digital information configured on a track of the recording medium and the differential signal indicating a tracking error;
a first key transformation data generating unit configured to demodulate key transformation data recorded on a recording medium of the first type;
a first demodulator which demodulates data recorded on the recording medium of the first type;
a second key transformation data generating unit configured to demodulate key transformation data recorded on a recording medium of the second type;
a second demodulator which demodulates data recorded on the recording medium of the second type; and
a switching unit configured to switch connections between said signal processing unit and one of said first demodulator, said second demodulator, said first key transformation data generating unit, and said second key transformation data generating unit such that (i) the sum signal output from said signal processing unit is input to said first demodulator and the differential signal output from said signal processing unit is input to said first key transformation unit, when said identifying unit identifies the type as the first type, and (ii) the sum signal output from said signal processing unit is input to said second demodulator and said second key transformation data generating unit, when said identifying unit identifies the type as the second type.

7. A reproduction apparatus connected to a host apparatus, which reads information from a recording medium, said reproduction apparatus comprising:
a readout unit configured to read the information from the recording medium;
an identifying unit configured to identify a type of the recording medium based on the information read from the recording medium by said readout unit; and
a copyright protection unit configured to perform an operation for copyright protection associated with a result of the identification by said identifying unit.

8. The reproduction apparatus according to Claim 7,
wherein said identifying unit is configured to identify the type as a first type or a second type,
said copyright protection unit includes:
a storage unit in which a host revocation list is stored;
a comparison unit configured to read the host revocation list from the recording medium via said reading and writing unit and to compare (a) the host revocation list that has been read and (b) the host revocation list stored in said storage unit and to identify a newest host revocation list, when said identifying unit identifies the type as the first type;
an updating unit configured (a) to store, in said storage unit, the newest host revocation list identified in the comparison by said comparison unit, or (b) to update the host revocation list recorded on the recording medium, according to a result of the comparison by said comparison unit; and
an authentication unit configured to perform authentication with the host apparatus using the newest host revocation list identified in the comparison by said comparison unit.

9. The reproduction apparatus according to Claim 7,
wherein said identifying unit is configured to identify the type as a first type or a second type,
said reading and writing unit is configured to read a unique disc identifier from the recording medium, and
said copyright protection unit includes:
an ID extension unit configured to perform bit-extension on the unique disc identifier that has been read from the recording medium by said reading and writing unit, when said identifying unit identifies the type as the first type; and
an input and output unit configured to transmit the unique disc identifier bit-extended by said ID extension unit to the host apparatus when said identifying unit identifies the type as the first type, and to transmit the unique disc identifier read from the recording medium by said reading and writing unit to the host apparatus when said identifying unit identifies the type as the second type.

10. A host apparatus connected to a reproduction apparatus which reads information from a recording medium, said host apparatus comprising:
a first input and output unit configured to input and output information to and from the reproduction apparatus; and
a copyright protection unit configured to perform an operation for copyright protection associated with a type of the recording medium based on information related to the recording medium, the information being received from the reproduction apparatus via said first input and output unit,
wherein the reproduction apparatus includes a second input and output unit configured to input and output the information to and from said host apparatus,
the second input and output unit is configured to transmit record information and type information to said host apparatus as the information related to the recording medium, the record information indicating whether or not key information is recorded on a user area of the recording medium, and the type information indicating whether a type of the recording medium is a first type or a second type, and
said copyright protection unit includes:
a storage unit configured to store key information;
a first key information reception unit configured to obtain the key information recorded on the user area of a recording medium of the first type via the reproduction apparatus and said first input and output unit; and
a second key information reception unit configured to obtain the key information recorded on the user area of a recording medium of the second type and the key information recorded on a lead-in area of the recording medium of the second type via the reproduction apparatus and said first input and output unit.

11. The host apparatus according to Claim 10,
wherein said copyright protection unit further includes:
a first comparison unit configured to compare the key information obtained by said first key information reception unit and the key information stored in said storage unit to identify newest key information, when (a) the type information indicates the first type and (b) the record information indicates that the key information is recorded on the user area of the recording medium;
a first updating unit configured (i) to record the key information stored in said storage unit on the user area of the recording medium of the first type via said first input and output unit and the reproduction apparatus, when (i-1) the type information indicates the first type and (i-2) the record information indicates that the key information is not stored on the user area of the recording medium, and (ii) to record the newest key information identified in the comparison by said first comparison unit on the user area of the recording medium of the first type or store the newest key information on said storage unit, according to a result of the comparison by said first comparison unit, when (ii-1) the type information indicates the first type and (ii-2) the record information indicates that the key information is recorded on the user area on the recording medium;
a second comparison unit configured to compare (i) the key information on the lead-in area obtained by said second key information reception unit and the key information stored in said storage unit to identify the newest key information, when (i-1) the type information indicates the second type and (i-2) the record information indicates that the key information is not recorded on the user area of the recording medium, and (ii) (a) the respective key information on the user area, (b) the key information on the lead-in area obtained by said second key information reception unit and (c) the key information stored in said storage unit to identify the newest key information, when (ii-1) the type information indicates the second type and (ii-2) the record information indicates that the key information is recorded on the user area of the recording medium; and
a second updating unit configured to (i) (a) record the newest key information identified in the comparison by said second comparison unit on the user area of the recording medium of the second type via said first input and output unit and the reproduction apparatus and (b) to store, according to a result of the comparison by said second comparison unit, the newest key information on said storage unit, when (i-1) the type information indicates the second type and (i-2) the record information indicates that the key information is not recorded on the user area of the recording medium, and (ii) (a) to record the newest key information identified in the comparison by said second comparison unit according to a result of the comparison by said second comparison unit on the user area of the recording medium of the second type via said first input and output unit and the reproduction apparatus and/or (b) to store the newest key information on said storage unit, when (ii-1) the type information indicates the second type and (ii-2) the record information indicates that the key information is recorded on the user area on the recording medium, according to a result of the comparison by said second comparison unit.

12. The reproduction apparatus according to Claim 7,
wherein said identifying unit is configured to identify the type as a first type or a second type,
said copyright protection unit includes:
a signal processing unit configured to generate a sum signal and a differential signal based on the information read by said reading and writing unit, the sum signal being for reading digital information configured on a track of the recording medium and the differential signal indicating a tracking error;
a first key transformation data generating unit configured to demodulate key transformation data recorded on a recording medium of the first type;
a first demodulator which demodulates data recorded on the recording medium of the first type;
a second key transformation data generating unit configured to demodulate key transformation data recorded on a recording medium of the second type;
a second demodulator which demodulates data recorded on the recording medium of the second type; and
a switching unit configured to switch connections between said signal processing unit and one of said first demodulator, said second demodulator, said first key transformation data generating unit, and said second key transformation data generating unit such that (i) the sum signal output from said signal processing unit is input to said first demodulator and the differential signal output from said signal processing unit is input to said first key transformation data generating unit, when said identifying unit identifies the type as the first type, and (ii) the sum signal output from said signal processing unit is input to said second demodulator and said second key transformation data generating unit, when said identifying unit identifies the type as the second type.

13. A recording and reproduction method of information for an apparatus connected to a host apparatus, which reads information from and writes the information onto a recording medium, said recording and reproduction method comprising:
a reading and writing step of reading and writing the information from and onto the recording medium;
an identifying step of identifying a type of the recording medium based on the information read from the recording medium in said reading and writing step; and
a copyright protection step of performing an operation for copyright protection associated with a result of the identification in said identifying step.

14. The recording and reproduction method according Claim 13,
wherein the type is identified as a first type or a second type in said identifying step,
said copyright protection step includes:
a comparison sub-step of reading a host revocation list from the recording medium via said reading and writing step and comparing (a) the host revocation list that has been read and (b) the host revocation list stored in a storage unit to identify a newest host revocation list, when the type is identified as the first type in said identifying step;
an updating step of (a) storing, in the storage unit, the newest host revocation list identified in the comparison in said comparison step, or (b) updating, via said reading and writing step, the host revocation list recorded on the recording medium, according to a result of the comparison by said comparison step; and
an authentication sub-step of performing authentication with the host apparatus using the newest host revocation list identified in the comparison in said comparison sub-step.

15. The recording and reproduction method according Claim 13,
wherein the type is identified as a first type or a second type in said identifying step,
a unique disc identifier is read from the recording medium in said reading and writing step, and
said copyright protection step includes:
an ID extension sub-step of performing bit-extension on the unique disc identifier that has been read from the recording medium in said reading and writing step, when the type is identified as the first type in said identifying step; and
an input and output sub-step of transmitting the unique disc identifier bit-extended in said ID extension sub-step to the host apparatus when the type is identified as the first type in said identifying step, and transmitting the unique disc identifier read from the recording medium in said reading and writing step to the host apparatus when the type is identified as the second type in said identifying step.

16. A recording and reproduction method by a host apparatus connected to a recording and reproduction apparatus which reads information from and writes the information to a recording medium, said recording and reproduction method comprising:
a first input and output step of inputting and outputting the information to and from the recording and reproduction apparatus; and
a copyright protection step of performing an operation for copyright protection associated with a type of the recording medium based on information related to the recording medium, the information being received from the recording and reproduction apparatus via said first input and output step,
wherein the recording and reproduction apparatus includes a second input and output unit configured to input and output the information to and from the host apparatus,
the second input and output unit is configured to transmit record information and type information to the host apparatus as the information related to the recording medium, the record information indicating whether or not key information is recorded on a user area of the recording medium, and the type information indicating whether a type of the recording medium is the first type or the second type, and
said copyright protection step includes:
a first key information reception sub-step of obtaining the key information recorded on the user area of a recording medium of the first type via the recording and reproduction apparatus and said first input and output step; and
a second key information reception sub-step of obtaining the key information recorded on the user area of a recording medium of the second type and the key information recorded on a lead-in area of the recording medium of the second type via the recording and reproduction apparatus and said first input and output step.

17. The recording and reproduction method according to Claim 16,
wherein said copyright protection step further includes:
a first comparison sub-step of comparing the key information obtained by said first key information reception sub-step and the key information stored in the storage unit to identify newest key information when (a) the type information indicates the first type and (b) the record information indicates that the key information is recorded on the user area of the recording medium;
a first updating sub-step of (i) recording the key information stored in the storage unit on the user area of the recording medium of the first type via said first input and output step and the recording and reproduction apparatus, when (i-1) the type information indicates the first type and (i-2) the record information indicates that the key information is not recorded on the user area of the recording medium, and (ii) recording the newest key information identified in the comparison in said first comparison sub-step on the user area of the recording medium of the first type or store the newest key information on the storage unit, according to a result of the comparison by said first comparison sub-step, when (ii-1) the type information indicates the first type and (ii-2) the record information indicates that the key information is recorded on the user area on the recording medium;
a second comparison sub-step of comparing (i) the key information on the lead-in area obtained by said second key information reception sub-step and the key information stored in the storage unit to identify the newest key information, when (i-1) the type information indicates the second type and (i-2) the record information indicates that the key information is not recorded on the user area of the recording medium, and (ii) (a) the key information on the user area, (b) the key information on the lead-in area obtained by said second key information reception sub-step and (c) the key information stored in the storage unit to identify the newest key information, when (ii-1) the type information indicates the second type and (ii-2) the record information indicates that the key information is recorded on the user area of the recording medium; and
a second updating sub-step of (i) (a) recording the newest key information identified in the comparison in said second comparison sub-step, on the user area of the recording medium of the second type via said first input and output step and the recording and reproduction apparatus and (b) storing, according to a result of the comparison in said second comparison sub-step, the newest key information on the storage unit, when (i-1) the type information indicates the second type and (i-2) the record information indicates that the key information is not recorded on the user area of the recording medium, and (ii) (a) recording the newest key information identified in the comparison in said second comparison sub-step on the user area of the recording medium of the second type via said first input and output step and the recording and reproduction apparatus and/or (b) storing the newest key information on the storage unit, when (ii-1) the type information indicates the second type and (ii-2) the record information indicates that the key information is recorded on the user area of the recording medium, according to a result of the comparison by said second comparison sub-step.

18. The recording and reproduction method according to Claim 13,
wherein the type is identified as a first type or a second type in said identifying step,
said copyright protection step includes:
a signal processing sub-step of generating a sum signal and a differential signal based on the information read by said reading and writing step, the sum signal being for reading digital information configured on a track of the recording medium and the differential signal indicating a tracking error;
a first key transformation data generating sub-step of demodulating key transformation data recorded on a recording medium of the first type;
a first demodulator which demodulates data recorded on the recording medium of the first type;
a second key transformation data generating sub-step of demodulating key transformation data recorded on a recording medium of the second type;
a second demodulator which demodulates data recorded on the recording medium of the second type; and
a switching sub-step of switching connections between the signal processing sub-step and one of the first demodulator, the second demodulator, said first key transformation data generating sub-step, and said second key transformation data generating sub-step such that (i) the sum signal output in said signal processing sub-step is input to said first demodulator and the differential signal output in said signal processing sub-step is used in said first key transformation sub-step, when the type is identified as the first type in said identifying step, and (ii) the sum signal output in said signal processing sub-step is used in said second demodulator and said second key transformation data generating sub-step, when the type is identified as the second type in said identifying step.

19. A reproduction method for an apparatus connected to a host apparatus, which reads information from a recording medium, said reproduction method comprising:
a readout step of reading the information from the recording medium;
an identifying step of identifying a type of the recording medium based on the information read from the recording medium in said readout step; and
a copyright protection step of performing an operation for copyright protection associated with a result of the identification in said identifying step.

20. The reproduction method according to Claim 19,
wherein the type is identified as a first type or a second type in said identifying step,
said copyright protection step includes:
a comparison sub-step of reading a host revocation list from the recording medium via said reading and writing step and comparing (a) the host revocation list that has been read and (b) the host revocation list stored in the storage unit and to identify a newest host revocation list, when the type is identified as the first type in said identifying step;
an updating sub-step of (a) storing, in the storage unit, the newest host revocation list identified in the comparison in said comparison sub-step, or (b) updating the host revocation list recorded on the recording medium, according to a result of the comparison in said comparison sub-step; and
an authentication sub-step of performing authentication with the host apparatus using the newest host revocation list identified in the comparison by said comparison sub-step.

21. The reproduction method according to Claim 19,
wherein the type is identified as a first type or a second type in said identifying step,
a unique disc identifier is read from the recording medium in said reading and writing step, and
said copyright protection step includes:
an ID extension sub-step of performing bit-extension on the unique disc identifier that has been read from the recording medium in said reading and writing step, when the type is identified as the first type in said identifying step; and
an input and output sub-step of transmitting the unique disc identifier bit-extended in said ID extension sub-step to the host apparatus when the type is identified as the first type in said identifying step, and to transmit the unique disc identifier read from the recording medium in said reading and writing step to the host apparatus when the type is identified as the second type in said identifying step.

22. An information reproduction method for a host apparatus connected to a reproduction apparatus which reads information from a recording medium, said reproduction method comprising:
a first input and output step of inputting and outputting the information to and from the reproduction apparatus; and
a copyright protection step of performing an operation for copyright protection associated with a type of the recording medium based on information related to the recording medium, the information being received from the reproduction apparatus via said first input and output step,
wherein the reproduction apparatus includes a second input and output unit configured to input and output the information to and from the host apparatus,
the second input and output unit is configured to transmit record information and type information to the host apparatus as the information related to the recording medium, the record information indicating whether or not key information is recorded on a user area of the recording medium, and the type information indicating whether a type of the recording medium is a first type or a second type, and
said copyright protection step includes:
a first key information reception sub-step of obtaining the key information recorded on the user area of a recording medium of the first type via the reproduction apparatus and said first input and output step; and
a second key information reception sub-step of obtaining the key information recorded on the user area of a recording medium of the second type and the key information recorded on a lead-in area of the recording medium of the second type via the reproduction apparatus and said first input and output step.

23. The reproduction method according to Claim 22,
wherein said copyright protection step further includes:
a first comparison sub-step of comparing the key information obtained in said first key information reception sub-step and the key information stored in a storage unit to identify newest key information, when (a) the type information indicates the first type and (b) the record information indicates that the key information is recorded on the user area of the recording medium;
a first updating sub-step of (i) recording the key information stored in the storage unit on the user area of the recording medium of the first type via said first input and output step and the reproduction apparatus, when (i-1) the type information indicates the first type and (i-2) the record information indicates that the key information is not stored on the user area of the recording medium, and (ii) recording the newest key information identified in the comparison in said first comparison sub-step on the user area of the recording medium of the first type or store the newest key information on the storage unit, according to a result of the comparison by said first comparison sub-step, when (ii-1) the type information indicates the first type and (ii-2) the record information indicates that the key information is recorded on the user area on the recording medium;
a second comparison sub-step of comparing (i) the key information on the lead-in area obtained in said second key information reception sub-step and the key information stored in the storage unit to identify the newest key information, when (i-1) the type information indicates the second type and (i-2) the record information indicates that the key information is not recorded on the user area of the recording medium, and (ii) (a) the respective key information on the user area, (b) the key information on the lead-in area obtained by said second key information reception sub-step and (c) the key information stored in the storage unit to identify the newest key information, when (ii-1) the type information indicates the second type and (ii-2) the record information indicates that the key information is recorded on the user area of the recording medium; and
a second updating sub-step of (i) (a) recording the newest key information identified in the comparison in said second comparison sub-step on the user area of the recording medium of the second type via said first input and output step and the reproduction apparatus and (b) storing, according to a result of the comparison in said second comparison sub-step, the newest key information on the storage unit, when (i-1) the type information indicates the second type and (i-2) the record information indicates that the key information is not recorded on the user area of the recording medium, and (ii) (a) recording the newest key information identified in the comparison in said second comparison sub-step according to a result of the comparison in said second comparison sub-step on the user area of the recording medium of the second type via said first input and output step and the reproduction apparatus and/or (b) storing the newest key information on the storage unit, when (ii-1) the type information indicates the second type and (ii-2) the record information indicates that the key information is recorded on the user area on the recording medium, according to a result of the comparison in said second comparison sub-step.

24. The reproduction method according to Claim 19,
wherein the type is identified as a first type or a second type in said identifying step,
said copyright protection step includes:
a signal processing sub-step of generating a sum signal and a differential signal based on the information read in said reading and writing step, the sum signal being for reading digital information configured on a track of the recording medium and the differential signal indicating a tracking error;
a first key transformation data generating sub-step of demodulating key transformation data recorded on a recording medium of the first type;
a first demodulator which demodulates data recorded on the recording medium of the first type;
a second key transformation data generating sub-step of demodulate key transformation data recorded on a recording medium of the second type;
a second demodulator which demodulates data recorded on the recording medium of the second type; and
a switching sub-step of switching connections between said signal processing sub-step and one of the first demodulator, the second demodulator, said first key transformation data generating sub-step, and said second key transformation data generating sub-step such that (i) the sum signal output in said signal processing sub-step is input to said first demodulator and the differential signal output in said signal processing sub-step is used in said first key transformation data generating sub-step, when the type is identified as the first type in said identifying step, and (ii) the sum signal output in said signal processing sub-step is used in said second demodulator and said second key transformation data generating sub-step, when the type is identified as the second type in said identifying step.
